# EUROPÄISCHE PATENTSCHRIFT

(11) **EP 1 468 272 B1**
(45) Veröffentlichungstag und Bekanntmachung des Hinweises auf die Patenterteilung: **16.08.2006**
(21) Anmeldenummer: 02793090.8
(22) Anmeldetag: 19.12.2002
(51) Int. Cl.: G01N 21/41

(54) **REFRAKTOMETER**
REFRACTOMETER
REFRACTOMETRE

(30) Priorität: 21.01.2002 EP 10202117
(43) Veröffentlichungstag der Anmeldung: 20.10.2004
(73) Patentinhaber: TESTO GmbH & Co., 79853 Lenzkirch (DE)
(72) Erfinder: LANGENBACHER, Markus, 79104 Freiburg (DE); DERR, Andreas, 79793 Wutöschingen (DE); EDER, Frank, 79780 Stühlingen (DE)
(74) Vertreter: Schmuckermaier, Bernhard
(86) Internationale Anmeldenummer: PCT/EP2002/014586
(87) Internationale Veröffentlichungsnummer: WO 2003/060492

(56) Entgegenhaltungen:
- EP-A- 0 305 109
- DE-U- 9 015 539
- US-A- 3 487 069
- US-A- 6 149 591
- US-A1- 2001 035 950

## Beschreibung

Die Erfindung bezieht sich auf ein Refraktometer zur Bestimmung des Brechungsindex einer Flüssigkeit und gegebenenfalls hiervon abgeleiteter Größen wie beispielsweise einer Zuckerkonzentration, mit einer Sensoranordnung, die eine Strahlungsquelle zur Erzeugung eines Meßstrahls, einen Strahlungsdetektor zur Detektion des Meßstrahls und eine von dem Meßstrahl zu durchlaufende Meßstrecke aufweist, an der eine von der Flüssigkeit zu benetzende Meßfläche angeordnet ist, mit der der Meßstrahl wechselwirkt (siehe US 6149591).

Derartige Refraktometer werden als digitale oder analoge Meßgeräte beispielsweise zur Bestimmung der Konzentration bestimmter in einer Flüssigkeit gelöster und die Brechzahl beeinflussender Stoffe verwendet. Beispielsweise ist auf dem Gebiet der Winzerei die Bestimmung des Zuckergehaltes des Traubensaftes ein wichtiges Anwendungsgebiet solcher Messungen.

Es sind auf diesem Gebiet grundsätzlich zwei Arten von Meßgeräten bekannt, von denen die erste (siehe z.B. DE 9015529 U oder US 3487069) die Entnahme einer Probe und das Einbringen der Probe in das Meßgerät beispielsweise durch Einträufeln erfordert, während die andere Bauform (siehe US 6149591) das Eintauchen eines Sensors in den Analyten, das heißt in die Flüssigkeit zur Durchführung der Messung vorsieht.

Dabei ist bei der ersten genannten Variante die Probeentnahme relativ umständlich und zeitaufwendig und es ist vor einer neuen Probeentnahme notwendig, das Meßgerät gründlich zu reinigen. Bei der zweiten Variante von Meßgeräten ergibt sich oft als Problem, daß das Refraktometer eine andere Temperatur aufweist als der Analyt, so daß die notwendige Temperaturkompensation bei der Bestimmung des temperaturabhängigen Brechungsindex sehr schwierig durchzuführen ist. Außerdem kann es sich als schwierig erweisen, beim Einbringen einer Sonde in den Analysanten den Einfluß von Fremdlicht bei der optischen Messung zu berücksichtigen.

Aus der US-Patentschrift 5859696 ist ein Refraktometer ähnlich der eingangs genannten Art zur Bestimmung des Zuckergehaltes in einer Flüssigkeit bekannt, bei dem ein optischer Strahl von einer Strahlungsquelle ausgesandt, im Innern eines transparenten Körpers an einer Meßfläche reflektiert und in einen Strahlungsdetektor zurückgeleitet wird. Wird die Meßfläche außen mit einer Flüssigkeit mit hohem Brechungsindex, beispielsweise einem Softdrink mit einer hohen Zuckerkonzentration benetzt, so führt dies zu einer Annäherung der Brechzahl der Flüssigkeit an der Meßfläche an die Brechzahl des transparenten Körpers und damit zu einer schwächeren Reflexion des Strahls an der Meßfläche, oder anders ausgedrückt dazu, daß der Strahl größtenteils durch die Meßfläche hindurch und in die Flüssigkeit eintritt, so daß die Intensität des reflektierten Strahls stark abnimmt. Dies wird optisch detektiert und in Abhängigkeit von der gemessenen Intensität des reflektierten Strahls ergibt sich eine hohe beziehungsweise geringe Zuckerkonzentration. Das Meßgerät ist einfach derart verwendbar, daß eine Meßspitze in die Flüssigkeit eingetaucht und an dem Handgerät das entsprechende Signal erkannt wird. Die Temperatur der Flüssigkeit wird bei der Messung nicht berücksichtigt.

Der vorliegenden Erfindung liegt demgegenüber die Aufgabe zugrunde, ein einfach aufgebautes Refraktometer der eingangs genannten Art derart auszubilden, daß einerseits eine einfache und schnelle Handhabung ermöglicht wird und andererseits eine effektive Temperaturkompensation gewährleistet ist.

Die Aufgabe wird erfindungsgemäß dadurch gelöst, daß die Meßfläche in einer Probemulde einer in die Flüssigkeit einbringbaren Einstechsonde angeordnet ist.

Durch die erfindungsgemäße Konstruktion wird die Probeentnahme und die Messung durch eine Einstechsonde möglich, die einerseits in die Flüssigkeit einbringbar ist und andererseits die Probemulde enthält, in der nach der Entnahme der zu vermessenden Flüssigkeit die Brechzahl beziehungsweise der Brechungsindex gemessen wird. Da in der Probemulde nur ein geringes Flüssigkeitsvolumen verbleibt, findet schnell ein Temperaturausgleich zwischen der Einstechsonde und der Flüssigkeit statt, so daß das Refraktometer und die Flüssigkeit bei der Messung dieselbe Temperatur aufweisen. Außerdem wird eine Temperaturkompensation durch Messung der Temperatur an der Sonde einfach möglich. Zu diesem Zweck kann innerhalb der Einstechsonde ein Temperatursensor angeordnet sein.

Zur Entnahme einer neuen Probe einer anderen oder derselben Flüssigkeit muß die Einstechsonde lediglich ein weiteres Mal in eine Flüssigkeit eingetaucht werden, wobei wahlweise vorher die Probemulde kurz gesäubert werden kann, wenn dies im Rahmen des Umgangs mit den zu vermessenden Flüssigkeiten notwendig erscheint. Ansonsten ist auch denkbar, die Sonde einfach erneut in die Flüssigkeit einzuführen, wobei die bei der ersten Messung vermessene Flüssigkeit aus der Probemulde durch die weitere Flüssigkeit ausgewaschen wird.

Durch das erfindungsgemäße Refraktometer ist somit die Probeentnahme und gegebenenfalls auch die wiederholte Anwendung bei einer Messung erheblich vereinfacht und auch die Möglichkeiten einer effektiven Temperaturkompensation sind gegeben. Die Einstechsonde kann beispielsweise an ihrem Ende spitz ausgebildet sein, um das Einstechen in größere Früchte zur Vermessung des in ihnen befindlichen Fruchtsaftes direkt zu ermöglichen. Es kann auch an der Oberfläche der Einstechsonde eine Rinne vorgesehen sein, durch die die zu vermessende Flüssigkeit nach einem geringen Eintauchen in den Flüssigkeitsspiegel oder eine Frucht zu der Probemulde hin fließen kann.

Eine vorteilhafte Ausgestaltung der Erfindung sieht vor, daß die Meßfläche durch einen Linsenkörper begrenzt ist.

Der Linsenkörper ist so angeordnet, daß er auf der einen Seite durch die Flüssigkeit benetzbar ist und daß auf der anderen Seite die Linsenkörperoberfläche von der Flüssigkeit freigehalten ist. Auf der von der Flüssigkeit freigehaltenen Seite des Linsenkörpers sind dann die Strahlungsquelle und der Strahlungsdetektor angeordnet, so daß der Meßstrahl von der Strahlungsquelle in den Linsenkörper einfallen, dort an der mit der Flüssigkeit benetzten Meßfläche wenigstens teilweise reflektiert werden und dann zu dem Strahlungsdetektor geleitet werden kann. Die Intensität des reflektierten Meßstrahls ist dann abhängig von dem Verhältnis der Brechzahlen des Linsenkörpers und der diesen benetzenden Flüssigkeit. Die Gestaltung der Geometrie des Linsenkörpers wird vorteilhaft so ausgeführt, daß der Meßstrahl in dem Linsenkörper gebündelt wird oder gebündelt bleibt und daß eine passende Anordnung der Strahlungsquelle und des Strahlungsdetektors in bezug auf den Linsenkörper gewählt werden kann.

Eine weitere vorteilhafte Ausgestaltung der Erfindung sieht vor, daß die Meßfläche durch einen Glaskörper begrenzt ist.

Grundsätzlich wird dadurch, daß die Meßfläche durch einen Glaskörper begrenzt ist, die Reinigung der Meßfläche nach der Durchführung der Messung vereinfacht, ohne daß die Meßfläche zerkratzt wird. Außerdem ist ein effektiver Temperaturausgleich zwischen der Sensoranordnung und der Flüssigkeit durch die relativ gute Wärmeleitfähigkeit des Glases gewährleistet.

In bezug auf die Stabiliät des mechanischen Aufbaus wird die Erfindung vorteilhaft dadurch ausgestaltet, daß die Strahlungsquelle, der Strahlungsdetektor und der Linsenkörper oder gegebenenfalls der Glaskörper in einer metallischen Aufnahme gehalten sind, die insbesondere aus Stahl oder Aluminium besteht.

Die Gestaltung der Aufnahme aus einem stabilen Material in Form von Stahl oder Aluminium führt dazu, daß die geometrische Anordnung der Strahlungsquelle, des Detektors und der Linse so stabil ist, daß auch durch Stöße keine Änderung der Meßstrecke zu befürchten ist. Auch findet durch die Ausgestaltung aus einem Metall eine sehr schnelle und effektive Temperaturangleichung zwischen den einzelnen Elementen der Sensoranordnung und der Flüssigkeit in der Probemulde statt. Dabei kann die Temperaturangleichung durch Kontakt von Flüssigkeit und metallischer Aufnahme verbessert werden.

Vorteilhaft ist außerdem, in den Bereich der Sensoranordnung einen Temperatursensor zu integrieren. Auf diese Weise kann gleichzeitig mit der Messung des temperaturabhängigen Brechungsindex die Temperatur der Sensoranordnung und der Flüssigkeit gemessen werden, nachdem diese aneinander angeglichen sind, was nach wenigen Sekunden der Fall ist. Danach kann in einer Auswerteeinrichtung unter Berücksichtigung der gemessenen Temperatur der gemessene Brechungsindex der Flüssigkeit auf eine Normtemperatur umgerechnet werden. Da bei der erfindungsgemäßen Sensoranordnung nur eine einzige Temperatur zur Kompensation zu berücksichtigen ist, wird auch die Kalibrierung der Sensoranordnung stark vereinfacht.

Um die Sensoranordnung außerdem gegen Meßwertverfälschungen bei kurzfristigen Temperaturänderungen zu schützen, kann vorgesehen sein, daß die metallische Aufnahme mit einem Stoff, insbesondere einem Kunststoff ummantelt ist, dessen Wärmeleitfähigkeit geringer ist als die des Materials der Aufnahme.

Es wird sich dabei im Normalfall um eine Kunststoffumhüllung der Sensoranordnung mit einem Polymer oder einem Elastomer handeln, die die Probemulde mit der Meßfläche selbstverständlich freiläßt. Die entnommene Probe einer Flüssigkeit wird unabhängig von der Umgebungstemperatur durch den thermischen Kontakt in der Probemulde in ihrer Temperatur an die Temperatur der Sensoranordnung weitgehend angeglichen und bei dieser Temperatur wird der Brechungsindex gemessen. Diese Temperatur wird gleichzeitig im Inneren des Refraktometers im Bereich der Sensoranordnung vorteilhaft durch einen Temperatursensor gemessen, um Temperatureinflüsse zu berücksichtigen beziehungsweise das Meßergebnis auf eine Normtemperatur beziehen zu können.

Eine weitere vorteilhafte Ausgestaltung der Erfindung sieht vor, daß der Linsenkörper oder der Glaskörper aus einem Mateinsbesondere größer als 2 ist. Bevorzugt liegt der Brechungsindex der Linse bei 1,85.

Ein hoher Brechungsindex des Glaskörpers ist dann vorteilhaft, wenn Flüssigkeiten mit ebenfalls hohen Elektrizitätskonstanten beziehungsweise Brechungsindices zu vermessen sind.

Vorteilhaft weist zum Zwecke eines besonders schnellen Temperaturausgleichs die Probemulde ein Volumen von weniger als einem Milliliter auf.

Die Sensoranordnung kann vorteihaft dadurch ausgestaltet sein, daß die Strahlungsquelle durch eine Infrarotleuchtdiode und der Strahlungsdetektor durch einen im Infrarotgebiet sensitiven Halbleiter gebildet ist.

Im Infrarotbereich ist die Störung durch Fremdlicht im Normalfall besonders gering und die verwendeten Bauteile arbeiten zuverlässig und wenig fehleranfällig.

Vorteilhaft weist das Refraktometer einen Linsenkörper auf, der einen Bereich mit größerer Krümmung aufweist, der der Strahlungsquelle und dem Strahlungsdetektor zugewandt ist und einen Bereich mit geringerer Krümmung, der die Meßfläche begrenzt.

Durch diese Gestaltung des Linsenkörpers ist eine optimale Führung des Meßstrahls mit einer meßtechnisch optimalen Gestaltung der Meßfläche verbunden wobei die Meßfläche zusätzlich leicht zu reinigen ist.

Im folgenden wird die Erfindung anhand eines Ausführungsbeispiels in einer Zeichnung gezeigt und nachfolgend beschrieben.

Dabei zeigt
Figur 1 den inneren Aufbau der Sensoranordnung schematisch,
Figur 2 schematisch eine Einstechsonde, und
Figur 3 eine Auswerteeinrichtung des erfindungsgemäßen Refraktometers.

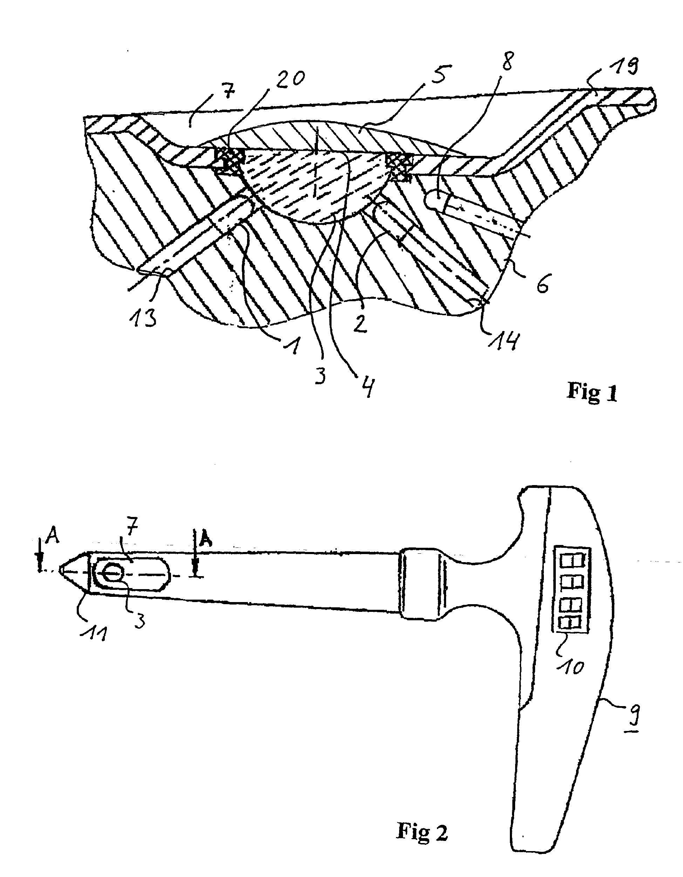

Zunächst sei anhand der Figur 1 das Funktionsprinzip des erfindungsgemäßen Refraktometers erläutert. Es ist dort schematisch die Sensoranordnung mit der Strahlungsquelle 1 in Form einer Infrarotleuchtdiode, dem Strahlungsdetektor 2 in Form einer lichtempfindlichen Halbleiterdiode und der dazwischen liegenden Meßstrecke beschrieben. Von der Strahlungsquelle 1 aus wird ein Meßstrahl zu dem aus Glas bestehenden Linsenkörper 3 hin ausgestrahlt und tritt durch dessen sphärische oder annähernd sphärische Oberfläche senkrecht in den Glaskörper ein, durch den er sich bis zu der Meßfläche 4 hin ausbreitet, die durch eine flache Begrenzungsfläche des Linsenkörpers 3 gebildet ist. Dort wird der Meßstrahl in Abhängigkeit vom Verhältnis der Brechzahlen (Brechungsindices) des Materials des Linsenkörpers und des Stoffes der Flüssigkeit 5, mit der der Linsenkörper benetzt ist, reflektiert oder teilweise in die Flüssigkeit hineingebrochen.

Wenigstens ein Teil des Strahls wird gegebenenfalls an der Meßfläche 4 zu dem Strahlungsdetektor 2 hin reflektiert und von diesem aufgenommen.

Die detektierte Strahlungsintensität wird mit Hilfe des Strahlungsdetektors 2 gemessen und ist ein Maß für den Brechungsindex der Flüssigkeit 5. Die Messung wird zur Bestimmung der Brechzahl mit einer Referenzmessung verglichen, die entweder ohne eine benetzende Flüssigkeit auf dem Linsenkörper 3 oder mit einer bekannten Flüssigkeit durchgeführt wurde.

Durch den geringen Öffnungswinkel des Strahlungsdetektors 2 gelangt sehr wenig Licht von außen durch die benetzende Flüssigkeit 5 und die Meßfläche 4 zu dem Strahlungsdetektor 2, so daß der Einfluß von Fremdlicht auf die Messung besonders gering gehalten werden kann.

Durch die Orientierung der Linse wird einerseits das Einbringen des Meßstrahls in den Linsenkörper 3 und der Austritt zu dem Strahlungsdetektor besonders verlustarm, andererseits wird durch die flach gestaltete Meßfläche 4 der Eintritt von Fremdlicht in den Linsenkörper 3 erschwert. Die Reinigung der Meßfläche 4 an ihrer Außenseite, die jeweils den zu vermessenden Flüssigkeiten 5 ausgesetzt ist, wird ebenfalls durch die flache Gestaltung erleichtert. Die Linse hat typisch einen Durchmesser von 3 mm und einen Brechungsindex größer als 1.5, insbesondere größer als 2.

Die Strahlungsquelle 1 und der Strahlungsdetektor 2 sind jeweils in Bohrungen innerhalb des Aufnahmekörpers 6 angeordnet, wodurch sie zuverlässig und unverrückbar in ihrer Position zueinander und zu dem Linsenkörper 3 festgelegt sind.

Außerdem gewährleistet der Aufnahmekörper 6, der aus einem Metall besteht, beispielsweise Stahl oder Aluminium, eine hervorragende Wärmeleitung, so daß die Elemente 1, 2, 3 der Sensoranordnung zuverlässig auf der selben Temperatur gehalten werden wie die Aufnahme 6, und durch die geringe Probengröße der Flüssigkeit 5 ist gewährleistet, daß die Probe mittels des gläsernen Linsenkörpers 3 durch Wärmetransport sehr schnell auf der gleichen Temperatur liegt wie der Aufnahmekörper 6.

In der Figur 1 ist beispielhaft eine kleine Probe in Form eines auf dem Linsenkörper 3 liegenden Tropfens einer Flüssigkeit 5 dargestellt, es kann jedoch ebenso vorgesehen sein, daß regelmäßig die Probemulde 7 völlig bis an ihren Rand gefüllt wird. In jedem Fall dauert der Temperaturausgleich zwischen der Probe und dem Aufnahmekörper 6 nur wenige Sekunden. Die Probemulde hat ein Volumen kleiner als 1 ml, insbesondere kleiner als 0.5 ml.

Zur Temperaturmessung ist in dem Aufnahmekörper 6 zusätzlich ein Temperatursensor 8 vogesehen, der bei der Auswertung der Messungen die Temperaturkompensation erlaubt.

Der Aufnahmekörper 6 ist mit einer Kunststoffschicht 19 versehen, die ihn thermisch isoliert und somit die Sensoranordnung vor wechselnden Außeneinflüssen schützt. Im Randbereich des Linsenkörpers 3 ist dieser gegenüber der Kunststoffschicht 19 und dem Aufnahmekörper 6 mittels elastischer Dichtungen 20 abgedichtet.

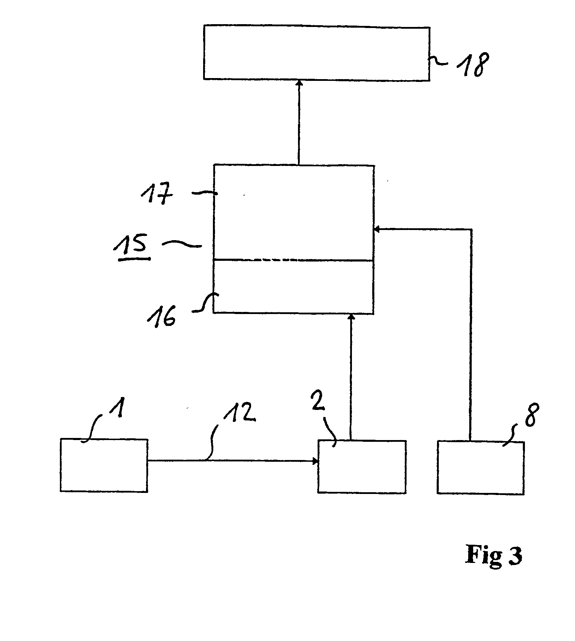

Die schematische Schnittdarstellung der Figur 1 entspricht einem Schnitt entlang der gestrichelten Linie A - A in der Figur 2, die im folgenden beschrieben werden soll. Die Figur 2 zeigt in einer Außenansicht ein Handrefraktometer mit einem Handgriff 9, in den eine Digitalanzeige 10 integriert ist. In dem Körper des Handrefraktometers ist eine Auswerteeinrichtung untergebracht, die die von dem Strahlungsdetektor 2 und dem Temperatursensor 8 gelieferten Daten auswertet. Die Sensoranordnung ist in der Nähe der Einstechspitze 11 angeordnet und zwar unter der Probemulde 7. In der Figur 2 ist der Linsenkörper 3 als Kreis zu erkennen.

Die Einstechspitze 11 ist so ausgebildet, daß sie in eine Frucht eingestochen werden kann, so daß der in der Frucht befindliche Fruchtsaft in die Probemulde 7 gelangt. Es ist jedoch auch denkbar, daß die Einstechspitze 11 in eine Flüssigkeit eingetaucht wird und daß sie an ihrer Oberseite eine rinnenartige Einkerbung aufweist, die bis zu der Probemulde 7 führt und das Einlaufen einer Probeflüssigkeit in die Probemulde 7 erlaubt, auch ohne daß die Einstechspitze 11 tief in die Flüssigkeit eingetaucht beziehungsweise in die Frucht eingestochen wird. Ansonsten wird die Einstechspitze soweit in den Analysanten eingeführt, daß die Probemulde sich füllt.

Anhand der Figur 3 soll nun die Funktionsweise des Refraktometers kurz schematisch erläutert werden. Der Meßstrahl 12 wird durch die Strahlungsquelle 1 in Form eines Infrarotstrahls erzeugt, der sich in der schematischen Darstellung der Figur 1 entlang der strichpunktiert dargestellten Mittelachse der Aufnahmebohrung 13 der Strahlungsquelle 1 bis zu der Meßfläche 4 hin ausbreitet, dort reflektiert wird und von dort entlang der ebenfalls strichpunktiert dargestellten Mittelachse der Aufnahmebohrung 14 des Strahlungsdetektors 2 weiter verläuft. In dem Strahlungsdetektor 2 findet die Messung der Intensität des reflektierten Meßstrahls 12 statt. Die gemessene Intensität wird an die Auswerteeinrichtung 15 geleitet, in der eine erste Recheneinrichtung 16 zunächst ohne Berücksichtigung der Temperatur anhand von Referenzwerten einen Wert für den aktuellen Brechungsindex beziehungsweise die Brechzahl berechnet. Dieser aus der Messung berechnete Wert wird dann in der zweiten Recheneinrichtung 17 unter Berücksichtigung der mittels des Temperatursensors 8 gemessenen und ebenfalls an die Auswerteeinrichtung 15 gegebenen Temperaturwertes auf eine Referenztemperatur bezogen und somit der Temperatureinfluß kompensiert. Der so berechnete und korrigierte Wert für den Brechungsindex beziehungsweise die Brechzahl wird dann an eine Anzeige 18 gegeben und dort mittels einer digitalen Anzeige dem Benutzer ausgegeben.

## Patentansprüche

1. Refraktometer zur Bestimmung des Brechungsindex einer Flüssigkeit (5) und gegebenenfalls hiervon abgeleiteter Größen wie beispielsweise einer Zuckerkonzentration, mit einer Sensoranordnung, die eine Strahlungsquelle (1) zur Erzeugung eines Meßstrahls (12), einen Strahlungsdetektor (2) zur Detektion des Meßstrahls (12) und eine von dem Meßstrahl zu durchlaufende Meßstrecke aufweist, an der eine von der Flüssigkeit (5) zu benetzende Meßfläche (4) angeordnet ist, mit der der Meßstrahl (12) wechselwirkt,
**dadurch gekennzeichnet, daß**
die Meßfläche (4) in einer Probemulde (7) einer in die Flüssigkeit (5) einbringbaren Einstechsonde (11) angeordnet ist.

2. Refraktometer nach Anspruch 1,
**dadurch gekennzeichnet, daß**
die Meßfläche (4) durch einen Linsenkörper (3) begrenzt ist.

3. Refraktometer nach Anspruch 1 oder 2,
**dadurch gekennzeichnet, daß**
die Meßfläche (4) durch einen Glaskörper begrenzt ist.

4. Refraktometer nach Anspruch 2 oder 3,
**dadurch gekennzeichnet, daß**
die Strahlungsquelle (1), der Strahlungsdetektor (2) und der Linsenkörper (3) oder gegebenenfalls der Glaskörper in einer metallischen Aufnahme (6) gehalten sind, die insbesondere aus Stahl oder Aluminium besteht.

5. Refraktometer nach einem der vorangehenden Ansprüche,
**dadurch gekennzeichnet, daß**
die metallische Aufnahme (6) mit einem Stoff, insbesondere einem Kunststoff (19) ummantelt ist, dessen Wärmeleitfähigkeit geringer ist als die des Materials der Aufnahme (6).

6. Refraktometer nach Anspruch 1 oder einem der folgenden
**dadurch gekennzeichnet, daß**
ein Temperatursensor (8) im Bereich der Sensoranordnung (1, 2, 3) vorgesehen ist.

7. Refraktometer nach Anspruch 2 oder einem der folgenden,
**dadurch gekennzeichnet, daß**
der Linsenkörper (3) oder der Glaskörper aus einem Material mit einem Brechungsindex besteht, der größer als 1.5, insbesondere größer als 2 ist.

8. Refraktometer nach Anspruch 1 oder einem der folgenden,
**dadurch gekennzeichnet, daß**
das Volumen der Probenmulde (7) weniger als 1 Milliliter beträgt.

9. Refraktometer nach Anspruch 1 oder einem der folgenden,
**dadurch gekennzeichnet, daß**
die Strahlungsquelle (1) durch eine Infrarotleuchtdiode und der Strahlungsdetektor (2) durch einen im Infrarotgebiet sensitiven Halbleiter gebildet ist.

10. Refraktometer nach Anspruch 1 oder einem der folgenden, mit einem Linsenkörper (3), der einen Bereich mit größerer Krümmung und einen Bereich mit geringerer Krümmung seiner Oberfläche aufweist,
**dadurch gekennzeichnet, daß**
der Bereich mit größerer Krümmung der Strahlungsquelle (1) und dem Strahlungsdetektor (2) zugewandt ist und der Bereich mit geringerer Krümmung die Meßfläche (4) begrenzt.

11. Verfahren zum Betrieb eines Refraktometers nach Anspruch 1 oder einem der folgenden,
**dadurch gekennzeichnet, daß**
die Einstechspitze zunächst in die Probeflüssigkeit eingetaucht oder in eine Frucht eingestochen wird und daß dann die Einstechspitze entnommen wird, und daß an der in der Probemulde verbliebenen Probe der Probenflüssigkeit die Messung der Brechzahl durchgeführt wird.

## Claims

1. A refractometer for determining the refractive index of a liquid (5) and, where appropriate, variables derived therefrom such as, for example, a sugar concentration, having a sensor assembly which comprises a radiation source (1) for generating a measuring beam (12), a radiation detector (2) for detecting the measuring beam (12) and a measuring path to be travelled by the measuring beam, on which sensor assembly a measuring surface (4) to be wetted by the liquid (5) and which interacts with the measuring beam (12) is disposed,
**characterised in that** the measuring surface (4) is disposed in a depression for samples (7) of an insertion probe (11) which can be inserted into the liquid (5).

2. A refractometer according to Claim 1,
**characterised in that** the measuring surface (4) is delimited by a lens body (3).

3. A refractometer according to Claim 1 or 2,
**characterised in that** the measuring surface (4) is delimited by a glass body.

4. A refractometer according to Claim 2 or 3,
**characterised in that** the radiation source (1), the radiation detector (2) and the lens body (3) or, if applicable, the glass body are held in a metallic mount (6), which is made of steel or aluminium in particular.

5. A refractometer according to one of the preceding Claims,
**characterised in that** the metallic mount (6) is encased with a material, in particular a synthetic material (19), having a thermal conductivity that is less than that of the material of the mount (6).

6. A refractometer according to Claim 1 or one of the following Claims,
**characterised in that** a temperature sensor (8) is provided in the vicinity of the sensor assembly (1, 2, 3).

7. A refractometer according to Claim 2 or one of the following Claims,
**characterised in that** the lens body (4) or the glass body is made from a material having a refractive index which is greater than 1.5, in particular greater than 2.

8. A refractometer according to Claim 1 or one of the following Claims,
**characterised in that** the volume of the depression for samples (7) is less than one millilitre.

9. A refractometer according to Claim 1 or one of the following Claims,
**characterised in that** the radiation source (1) is formed by an infrared LED and the radiation detector (2) is formed by a semiconductor that is sensitive in the infrared range.

10. A refractometer according to Claim 1 or one of the following Claims, having a lens body (3) comprising an area with greater curvature and an area with lesser curvature,
**characterised in that** the area with greater curvature faces the radiation source (1) and the radiation detector (2) and the area with lesser curvature delimits the measuring surface (4).

11. A method for operating a refractometer according to Claim 1 or one of the following Claims,
**characterised in that** the insertion tip is initially dipped into the sample liquid or is inserted into a fruit and then the insertion tip is removed,
and **in that** the measurement of the refractive index is performed on the sample of the sample liquid remaining in the depression for samples.

## Revendications

1. Réfractomètre pour déterminer l'indice de réfraction d'un liquide (5) et de grandeurs éventuellement issues de celui-ci telles que par exemple une concentration en sucre, comportant un dispositif capteur qui présente une source de rayonnement (1) pour produire un rayon de mesure (12), un détecteur de rayonnement (2) pour détecter le rayon de mesure (12) et un trajet de mesure à parcourir par le rayon de mesure, et avec dans le trajet de mesure une surface de mesure (4) devant être mouillée par le liquide (5) et interagissant avec le rayon de mesure (12),
**caractérisé en ce que**
la surface de mesure (4) est placée dans un puits d'échantillonnage (7) d'une sonde d'immersion pouvant être introduite dans le liquide (5).

2. Réfractomètre selon la revendication 1,
**caractérisé en ce que**
la surface de mesure (4) est délimitée par un corps de lentille (3).

3. Réfractomètre selon la revendication 1 ou 2,
**caractérisé en ce que**
que la surface de mesure (4) est délimitée par un corps de verre.

4. Réfractomètre selon la revendication 2 ou 3,
**caractérisé en ce que**
la source de rayonnement (1), le détecteur de rayonnement (2) et le corps de lentille (3) ou éventuellement le corps de verre sont contenus dans un logement métallique (6), notamment en acier ou en aluminium.

5. Réfractomètre selon l'une quelconque des revendications précédentes,
**caractérisé en ce que**
le logement métallique (6) est enveloppé d'une matière, notamment une matière plastique (19), de moindre conductivité thermique que le matériau dont se compose le logement (6).

6. Réfractomètre selon la revendication 1 ou l'une quelconque des revendications suivantes,
**caractérisé en ce qu'**
un capteur de température (8) est prévu à proximité du dispositif capteur (1, 2, 3).

7. Réfractomètre selon la revendication 2 ou l'une quelconque des revendications suivantes,
**caractérisé en ce que**
le corps de lentille (3), ou le corps de verre, se compose d'un matériau dont l'indice de réfraction est supérieur à 1,5, notamment supérieur à 2.

8. Réfractomètre selon la revendication 1 ou l'une quelconque des revendications suivantes,
**caractérisé en ce que**
le volume du puits d'échantillonnage (7) est inférieur à 1 millilitre.

9. Réfractomètre selon la revendication 1 ou l'une quelconque des revendications suivantes,
**caractérisé en ce que**
la source de rayonnement (1) est constituée par une diode électroluminescente infrarouge et le détecteur de rayonnement (2) par un semiconducteur sensible dans le domaine infrarouge.

10. Réfractomètre selon la revendication 1 ou l'une quelconque des revendications suivantes, présentant un corps de lentille (3) comportant une surface ayant une zone à courbure relativement grande et une zone à courbure relativement faible,
**caractérisé en ce que**
la zone à courbure relativement grande est tournée vers la source de rayonnement (1) et vers le détecteur de rayonnement (2) et la zone à courbure relativement faible délimite la surface de mesure (4).

11. Procédé pour l'utilisation d'un réfractomètre selon la revendication 1 ou l'une quelconque des revendications suivantes,
**caractérisé en ce qu'**
on introduit tout d'abord la pointe d'immersion dans le liquide à échantillonner ou dans un fruit, puis on l'en retire et on effectue la mesure de l'indice de réfraction sur l'échantillon de liquide restant dans le puits d'échantillonnage.
